**Europäisches Patentamt**

**European Patent Office**

**Office européen des brevets**

(19)

(11) Veröffentlichungsnummer : **0 433 594 B1**

(12) **EUROPÄISCHE PATENTSCHRIFT**

(45) Veröffentlichungstag der Patentschrift :
02.08.95 Patentblatt 95/31

(51) Int. Cl.$^6$ : **G01P 11/00**

(21) Anmeldenummer : **90119652.7**

(22) Anmeldetag : **13.10.90**

(54) **Verfahren zur anpassbaren Verarbeitung von Drehzahlsignalen.**

(30) Priorität : **25.11.89 DE 3939113**

(43) Veröffentlichungstag der Anmeldung :
**26.06.91 Patentblatt 91/26**

(45) Bekanntmachung des Hinweises auf die
Patenterteilung :
**02.08.95 Patentblatt 95/31**

(84) Benannte Vertragsstaaten :
**DE FR GB**

(56) Entgegenhaltungen :
**DE-A- 3 223 328**
**GB-A- 2 159 955**

(73) Patentinhaber : **ROBERT BOSCH GMBH**
**Postfach 30 02 20**
**D-70442 Stuttgart (DE)**

(72) Erfinder : **Kuettner, Thomas, Dipl.-Ing.**
**Lindenbachstrasse 69**
**W-7000 Stuttgart 31 (DE)**
Erfinder : **Birk, Manfred, Dipl.-Ing.**
**Gartenstrasse 1**
**W-7141 Oberriexingen (DE)**

EP 0 433 594 B1

**Beschreibung**

Stand der Technik

Die Erfindung geht aus von einem Verfahren nach der Gattung des Hauptanspruchs.

Zur Steuerung oder Regelung einer Brennkraftmaschine, beispielsweise bei der elektronischen Dieseleinspritzung (EDC) wird eine exakte Aussage bezüglich der Drehzahl der Brennkraftmaschine benötigt. Die wesentlichen Forderungen an eine Drehzahlerfassung und Drehzahlaufbereitung sind einerseits eine möglichst schnelle Erfassung und Aufbereitung der Drehzahl, damit die Phasenverzögerung möglichst klein bleibt und andererseits eine möglichst exakte Erfassung, bei der die von Verbrennungsvorgängen in der Brennkraftmaschine verursachten Drehzahlschwankungen ausgemittelt sind.

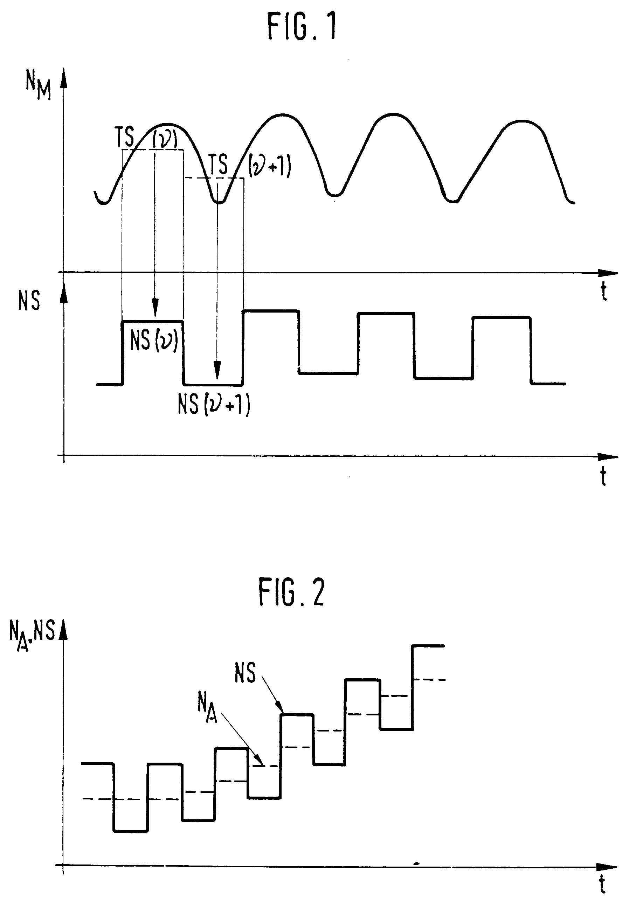

Bei relativ niedrigen Drehzahlen von n < 1 200 Umdrehungen pro Minute ergibt sich üblicherweise ein Drehzahlverlauf wie in Figur 1 dargestellt. Dabei ist der mittleren Drehzahl ein im Arbeitstakt der Brennkraftmaschine periodisch schwankender Anteil überlagert.

Bei herkömmlichen Verfahren zur Drehzahlbestimmung erfolgt die Drehzahlerfassung mit Hilfe eines Segmentrades, das beispielsweise auf der Kurbelwelle oder der Nockenwelle befestigt ist. Dabei wird das Segmentrad mittels eines Induktiv- oder Hall-Gebers abgetastet. Der Sensor liefert eine Folge von Impulsen, aus deren Abstand die Drehzahl ermittelt wird. Im unteren Teil von Figur 1 ist der Verlauf der so erhaltenen Segmentdrehzahlen NS über der Zeit aufgetragen.

Aus einer Anzahl dieser Segmentdrehzahlen könnte durch Mittelwertbildung ein genauer Drehzahlwert erhalten werden. Wie aus der DE-OS 32 23 328 bekannt ist, reicht ein nach dieser Methode bestimmter Drehzahlwert jedoch nicht aus, um eine moderne kennfeldgesteuerte Regeleinrichtung für die Zündung, die Einspritzung und dergleichen, durchzuführen. Deshalb wird in der DE-OS 32 23 328 vorgeschlagen, ein im Arbeitstakt der Brennkraftmaschine periodisch schwankendes Signal, beispielsweise die Drehzahl kurbelwellensynchron einmal pro Periode abzutasten und in einer Auswerteeinheit, beispielsweise einer Rechenschaltung so auszuwerten, daß ein exakter Mittelwert erhalten wird.

Die aus DE-OS 32 23 328 bekannte Einrichtung hat jedoch den Nachteil, daß lediglich ein Meßwert pro Periode zur Berechnung des Mittelwerts der Drehzahl verwendet wird, dies kann bei einem Auftreten von Störimpulsen zu Fehlern bei der Ermittlung des Drehzahlmittelwertes führen.

Aus der GB-A-2 159 955 ist eine elektronische Geschwindigkeitsmessung bei einer Brennkraftmaschine bekannt, bei der mit Hilfe eines Sensors ein mit einer Welle der Brennkraftmaschine verbundenes Geberrad mit einer Vielzahl von gleichartigen Marken abgetastet wird. Die vom Sensor erzeugte drehzahlabhängige Pulsfolge wird zur Drehzahlermittlung ausgewertet, indem die zeitlichen Abstände der aufeinanderfolgenden Pulse bestimmt werden. Aus mehreren erhaltenen Meßwerten wird dabei ein Mittelwert gebildet, der für die Steuerung bzw. Regelung der Brennkraftmaschine herangezogen wird.

Vorteile der Erfindung

Das erfindungsgemäße Verfahren mit den kennzeichnenden Merkmalen des Hauptanspruchs hat demgegenüber den Vorteil, daß zur Ermittlung der Drehzahl mehrere Meßwerte verwendet werden, daß die einzelnen Meßwerte, die zur Drehzahlbestimmung verwendet werden, mit unterschiedlichen Faktoren gewichtet und daß diese Gewichtungsfaktoren an die unterschiedlichen Erfordernisse angepaßt werden können. Damit wird eine schnelle und genaue Drehzahlerfassung erreicht und die Ungleichförmigkeiten des Drehzahlverlaufes werden ausgemittelt. Durch die in den abhängigen Ansprüchen aufgeführten Maßnahmen sind vorteilhafte Weiterbildungen des im unabhängigen Anspruch angegebenen Verfahrens möglich.

Zeichnung

Figur 1 ist der Verlauf der Drehzahl der Brennkraftmaschine über der Zeit dargestellt, gleichzeitig sind die nach dem Stand der Technik erhaltenen Segmentdrehzahlen über der Zeit aufgetragen und die Ungleichförmigkeit des Motors, die in der Segmentdrehzahl enthalten ist, angedeutet. In Figur 2 sind die Segmentdrehzahl und die mittlere Drehzahl ohne Phasenverzögerung nach dem erfindungsgemäßen Verfahren über der Zeit aufgetragen.

Beschreibung der Erfindung

Zur Erfassung der Drehzahl einer Brennkraftmaschine wird ein mit einer Welle der Brennkraftmaschine verbundenes Segmentrad, das an seinem Umfang mehrere (unterscheidbare) Segmente bzw. Markierungen aufweist, von einem Sensor abgetastet, dessen Ausgangssignal einer Auswerteanordnung, beispielsweise einem Rechner zugeführt wird. Als Segmentrad kann ein Rad mit Vertiefungen oder Erhöhungen auf der Oberfläche, ein Rad mit magnetischen und nichtmagnetischen Bereichen oder prinzipiell ein Rad mit unterscheidbaren Markierungen an seiner Oberfläche eingesetzt werden. Als Sensor kann ein Hall-Sensor, Induktiv-Sensor oder ein ähnlicher Sensor verwendet werden, wobei eine entsprechende Übereinstimmung zwischen der Art des Geberrades und dem gewählten Sensortyp erreicht werden sollte.

Ein solcher Sensor liefert Ausgangssignale, die die Eingangswerte für die Drehzahlverarbeitung darstellen, dies sind eine Folge von Segmentdrehzahlwerten NS $(v-2)$, NS $(v-1)$, NS $(v)$, NS $(v+1)$, ...,Abbildung 1 zeigt eine solche Folge von Segmentdrehzahlwerten über der Zeit. Am Ausgang der Einrichtung zur Drehzahlverarbeitung soll die aktuelle Drehzahl $N_A(v)$ zum aktuellen Zeitpunkt $v$ erhalten werden. Zur Bestimmung dieser aktuellen Drehzahl zum Zeitpunkt $v$ kann folgender Algorithmus verwendet werden:

$$N_A (v) = A \times NS (v) + B \times NS (v - 1) + C \times NS (v - 2) + D \times NS (v - 3) + ... \quad (1)$$

Die Drehzahl $N_A$ setzt sich also aus einer Summe von vielen einzelnen Drehzahlwerten NS zusammen, die jeweils mit einem Koeffizienten gewichtet sind, wobei diese Koeffizienten zu bestimmen sind. Zur Vereinfachung des Rechenaufwands und bedingt durch die Anzahl der erhältlichen Nebenbedingungen wird dieser Algorithmus verkürzt auf:

$$N_A (v) = A \times NS (v) + B \times NS (v - 1) + C \times NS (v - 2) \quad (2)$$

An diesen Algorithmus 2 werden drei Forderungen gestellt, um die Koeffizienten A, B, C zu bestimmen:

### 1. Forderung

Der Algorithmus soll für tiefe Frequenzen die Verstärkung = 1 haben, damit ergibt sich der Zusammenhang:

$$A + B + C = 1 \quad (3)$$

### 2. Forderung

Eine zweite Forderung besteht darin, daß für tiefe Frequenzen die Drehzahlungleichförmigkeit unterdrückt werden soll, dies entspricht einer Mittelwertbildung. Die zweite Nebenbedingung für den Algorithmus ist damit gegeben durch:

$$A + C = B \quad (4)$$

### 3. Forderung

Schließlich soll als dritte Forderung an den Algorithmus noch ein wählbares bzw. zu definierendes Phasenverhalten vorgegeben werden. Damit wird eine dritte Bedingung für die Ermittlung der Koeffizienten A, B und C erhalten. Als Beispiele für diese Phasenverhalten sind möglich:

1. Phase $\varphi = 0$ bei $f = 5$ Hz
2. Die Phasenvoreilung bei der Frequenz $f = 5$ Hz sei gleich der Phasenverzögerung bei der Drehzahlmessung. Damit wird erreicht, daß insgesamt, also bei der Drehzahlerfassung und der Drehzahlverwertung keine Phasennacheilung auftritt.

Zur Erfüllung der dritten Forderung wird der Phasenwinkel $\varphi$ berechnet. Dies geschicht durch eine Transformation der Gleichung 2 in den Frequenzbereich. Gleichung 5 stellt die so erhaltene mittlere Drehzahl $N_A$ (s) in Abhängigkeit von der Frequenz dar. Gleichung 6 bzw. Gleichung 7 werden aus Gleichung 5 durch aus der Mathematik bekannte Umformungen erhalten. Dabei stellt Gleichung 7 eine Beziehung für die Phase dar, der in den Gleichungen 6 und 7 auftretende Ausdruck $T_a$ entspricht einer Abtastzeit.

$$N_A(s) = A \times NS(s) + B \times NS(s) \times e^{-s} + C \times NS(s) \times e^{-2s} \quad (5)$$

$$\frac{N_A(S)}{NS(s)} = A + B \times (\cos wTa - j \sin wTa) + C \times (\cos w2Ta - j \times \sin w2Ta) \quad (6)$$

$$\varphi = \arctan \frac{\text{Imaginärteil}}{\text{Realteil}} = \arctan \frac{-(B \times \sin wTa + C \times \sin 2wTa)}{A + B \times \cos wTa + C \times \cos 2wTa} \quad (7)$$

Koeffizientenbestimmung:

Aus den Gleichungen (3) und (4) ergibt sich für B ein Wert von: B = 1/2. Weiterhin ergibt sich für Beispiel 1 mit einer Abtastzeit von Ta = 0,0146 Sekunden entsprechend $N_m$ = 700 Umdrehungen pro Minute für die Koeffizienten A und C:
A = 0,723 und C = - 0,277.

Mit den so bestimmten Koeffizienten lautet Gleichung 2:

$$N_A(v) = 0,723 \times NS(v) + 0,5 \times NS(v - 1) - 0,277 \times NS(v - 2)$$

Figur 2 zeigt den Zusammenhang zwischen der mittleren Drehzahl $N_A$ und der Segmentdrehzahl NS über der Zeit für eine entsprechend den vorstehenden Ausführungen durchgeführte Berechnung der mittleren Drehzahl $N_A$. Die mittlere Drehzahl $N_A$ hat infolge der vorgegebenen, bzw. so ausgewählten Forderungen bzw. Nebenbedingungen an den Algorithmus keine Phasenverzögerung gegenüber der Segmentdrehzahl NS. Durch Aufstellen von anderen Forderungen bei der Koeffizientenbestimmung ergibt sich ein anderes Verhalten der Drehzahl $N_A$. Je nach Aufstellung dieser Forderungen ist es damit möglich, bei der Ermittlung der mittleren Drehzahl $N_A$ ein Verfahren derart auszuwählen, daß die verlangten Anforderungen an die zu bestimmende mittlere Drehzahl erfüllt werden.

## Patentansprüche

1. Verfahren zum Erfassen der Drehzahl einer Brennkraftmaschine mit einem Sensor, der ein mit einer Welle der Brennkraftmaschine verbundenes Segmentrad abtastet und eine von der Oberfläche des Segmentrades abhängige, drehzahlabhängige Pulsfolge an eine Auswerteeinrichtung liefert, in der aus der Pulsfolge Segmentdrehzahlwerte für bestimmte Zeitpunkte $v$ gebil-

det werden, wobei aus mehreren Segmentdrehzahlwerten eine mittlere Drehzahl gebildet wird, dadurch gekennzeichnet, daß die mittlere Drehzahl $N_A$ aus Segmentdrehzahlwerten NS gebildet wird, nach einem Algorithmus:

$$N_A(\nu) = A \times NS(\nu) + B \times NS(\nu - 1) + C \times NS(\nu - 2) + \dots$$

und die voneinander verschiedenen Koeffizienten A, B, C ... aus Nebenbedingungen ermittelt werden, deren Zahl (N) der Zahl der Koeffizienten entspricht und die Nebenbedingungen so gewählt werden, daß gilt:

   I. A + B + C = 1 für tiefe Frequenzen der Pulsfolge

   II. A + C = B für tiefe Frequenzen der Pulsfolge

   III. Die Phasenverschiebung zwischen dem Drehzahlmittelwert ($N_A$) und der aktuellen Segmentdrehzahl (NS) sei Null bei einer bestimmten Frequenz des Drehzahlsignales oder die Phasenverschiebung zwischen dem Drehzahlmittelwert ($N_A$) und der aktuellen Segmentdrehzahl (NS) sei derart, daß keine Phasenverzögerung bei der Drehzahlerfassung bei der bestimmten Frequenz auftritt.

2.  Verfahren nach Anspruch 1, dadurch gekennzeichnet, daß die Koeffizienten A = 0.273, B = 0.5 und C = - 0.277 sind.

## Claims

1.  Method for detecting the rotational speed of an internal combustion engine with a sensor which senses a segment wheel which is connected to a shaft of the internal combustion engine and supplies to an evaluation device a pulse sequence which is dependent on the surface of the segment wheel and on the rotational speed, in which evaluation device values of the segment rotational speed for specific times $\mu$ are formed from the pulse sequence, an average rotational speed being formed from a plurality of values of the segment rotational speed, characterized in that the average rotational speed $N_A$ is formed from values NS of the rotational speed according to an algorithm:

$$N_A(\nu) = A \times NS(\nu) + B \times NS(\nu - 1) + C \times NS(\nu - 2) + \dots$$

and the mutually different coefficients A, B, C ... are determined from secondary conditions, the number (N) of which corresponds to the number of coefficients and the secondary conditions are selected in such a way that the following applies:

   I. A + B + C = 1 for low frequencies of the pulse sequence

   II. A + C = B for low frequencies of the pulse sequence

   III. The phase shift between the average value ($N_A$) of the rotational speed and the instantaneous segment rotational speed (NS) will be zero at a specific frequency of the rotational speed signal or the phase shift between the average value ($N_A$) of the rotational speed and the instantaneous segment rotational speed (NS) will be such that no phase delay occurs during the detection of rotational speed at the specific frequency.

2.  Method according to Claim 1, characterized in that the coefficients are A = 0.273, B = 0.5 and C = -0.277.

## Revendications

1.  Procédé pour détecter la vitesse de rotation d'un moteur à combustion interne à l'aide d'un capteur qui détecte une roue phonique ou roue à segment reliée à l'arbre d'un moteur à combustion interne et fournit à une installation d'exploitation une suite d'impulsions dépendant de la vitesse de rotation, suivant la surface de la roue phonique, installation d'exploitation qui forme pour certains instants déterminés ($\nu$) des valeurs de vitesse de rotation par segment à partir de la suite des impulsions, et à partir de plusieurs valeurs de vitesse de rotation par segment on forme une vitesse de rotation moyenne, caractérisé en ce qu'on forme la vitesse de rotation moyenne $|N_A|$ à partir des valeurs de la vitesse de rotation par segment $|NS|$, selon l'algorithme suivant :

$$N_A(\nu) = A \times NS(\nu) + B \times NS(\nu - 1) + C \times NS(\nu - 2) + \dots \quad (1)$$

et on détermine les coefficients $|A, B, C\dots|$ à partir de conditions auxiliaires, leur nombre (N) correspondant au nombre des coefficients et les conditions auxiliaires étant choisies pour avoir pour des fréquences basses de la suite d'impulsions :

   I. A + B + C = 1/ (pour des instants déterminés $\nu$)

   II. A + C = B (pour des instants déterminés $\nu$)

   III. Le déphasage entre la valeur moyenne de la vitesse de rotation ($N_A$) et la vitesse de rotation par segment, instantanée (NS) est égal à zéro pour une fréquence déterminée du signal de la vitesse de rotation ou déphasage entre la valeur moyenne de la vitesse de rotation ($N_A$) et la vitesse de rotation par segment (NS), instantanée, de façon à ne pas avoir de déphasage à la détection de la vitesse de rotation pour une certaine fréquence.

2.  Procédé selon la revendication 1, caractérisé par les coefficients suivants : A = 0,273, B = 0,5 et C = -0,277.

# FIG. 1

# FIG. 2